# EUROPEAN PATENT APPLICATION

(11) **EP 3 828 504 A1**
(43) Date of publication of application: **02.06.2021**
(21) Application number: 20210401.4
(22) Date of filing: 27.11.2020
(51) Int. Cl.: G01C 23/00

(54) **AIRCRAFT DISPLAY SYSTEM AND METHOD**

(30) Priority: 29.11.2019 US 201962941984 P
(71) Applicant: Bombardier Inc., Dorval QC H4S1Y9 (CA)
(72) Inventor: DOYON-POULIN, Philippe, Montréal, Quebec H8T 1V5 (CA); OUELLETTE, Benoit, Montréal, Quebec H3G 0C7 (CA)
(74) Representative: HGF

(57) **Abstract**

Systems and methods for controlling a display device of an aircraft are disclosed. The method includes using operational data associated with the aircraft, causing a primary flight display representation to be displayed on the display device where the primary flight display representation includes a first textual object having a first font size. The method also includes causing the display device to display a second textual object having a second font size. The second font size is 2.5 or more times larger than the first font size.

## Description

### TECHNICAL FIELD

The disclosure relates generally to aircraft, and more particularly to aircraft display systems.

### BACKGROUND

An electronic primary flight display (PFD) of an aircraft is used to display primary flight information and can include an airspeed indicator, turn coordinator, altimeter and a vertical speed indicator for example. A PFD can also be used to display other awareness-type information. The presentation of primary flight information and awareness-type information on the PFD can be distracting and require significant effort from the pilot to interpret the information presented.

### SUMMARY

In one aspect, the disclosure describes a primary flight display system for an aircraft. The system comprises:
a display device;
one or more processors operatively connected to the display device; and
non-transitory machine-readable memory operatively connected to the one or more processors, storing instructions executable by the one or more processors and configured to cause the one or more processors to:
   using data associated with an operation of the aircraft, cause a primary flight display representation to be displayed on the display device, the primary flight display representation including a first textual object having a first font size; and
   cause the primary flight display representation on the display device to include a second textual object having a second font size, the second font size being 2.5 or more times larger than the first font size.

The second font size may be three or more times larger than the first font size.

The second font size may be about four times larger than the first font size.

The second font size may be about five times larger than the first font size.

The second font size may be between 2.5 and ten times larger than the first font size.

The second font size may be between three and six times larger than the first font size.

The second textual object may be an alert flag.

The second textual object may have a transparent background.

The second textual object may have a color that is commensurate with an alert level associated with the second textual object.

The second textual object may have a transparency level that is commensurate with the or an alert level associated with the second textual object.

The second font size of the second textual object may be commensurate with the or an alert level associated with the second textual object.

The second textual object may define an axis scale.

The second textual object may define a heading scale.

The first and second textual objects may be collocated.

The first and second textual objects may be at least partially superimposed.

One or more characters of the second textual object may be partially transparent.

The instructions may be configured to cause the one or more processors to cause the second textual object to be displayed on an attitude indicator of the primary flight display representation.

The second textual object may be collocated with a graphical object.

The instructions may be configured to cause the one or more processors to cause a position of the second textual object to be selected based on a current phase of flight of the aircraft.

Embodiments can include combinations of the above features.

In another aspect, the disclosure describes a computer-implemented method for controlling a display device of an aircraft. The method comprises:
using data associated with an operation of the aircraft, causing a primary flight display representation to be displayed on the display device, the primary flight display representation including a first textual object having a first font size; and
causing the primary flight display representation on the display device to include a second textual object having a second font size, the second font size being 2.5 or more times larger than the first font size.

The second font size may be three or more times larger than the first font size.

The second font size may be about four times larger than the first font size.

The second font size may be about five times larger than the first font size.

The second font size may be between 2.5 and ten times larger than the first font size.

The second font size may be between three and six times larger than the first font size.

The second textual object may be an alert flag.

The second textual object may have a transparent background.

The second textual object may have a color that is commensurate with an alert level associated with the second textual object.

The second textual object may have a transparency level that is commensurate with the or an alert level associated with the second textual object.

The second font size of the second textual object may be commensurate with the or an alert level associated with the second textual object.

The second textual object may define an axis scale.

The second textual object may define a heading scale.

The first and second textual objects may be collocated.

The first and second textual objects may be at least partially superimposed.

One or more characters of the second textual object may be partially transparent.

The method may comprise causing the second textual object to be displayed on an attitude indicator of the primary flight display representation.

The second textual object may be collocated with a graphical object.

The method may comprise causing a position of the second textual object to be selected based on a current phase of flight of the aircraft.

Embodiments can include combinations of the above features.

In another aspect, the disclosure describes a computer program product for a method for controlling a display device of an aircraft, the computer program product comprising a non-transitory computer readable storage medium containing program code, the program code being readable/executable by a computer, processor or logic circuit to perform a method as disclosed herein.

In another aspect, the disclosure describes an aircraft comprising the system as disclosed herein.

Further details of these and other aspects of the subject matter of this application will be apparent from the detailed description included below and the drawings.

### DESCRIPTION OF THE DRAWINGS

Reference is now made to the accompanying drawings, in which:
FIG. 1 shows an exemplary aircraft flight deck and a corresponding exemplary aircraft including the flight deck;
FIG. 2 shows a schematic representation of an exemplary display system of the aircraft of FIG. 1;
FIG. 3 shows an exemplary primary flight display representation generated using the system of FIG. 2;
FIG. 4 shows another exemplary primary flight display representation generated using the system of FIG. 2;
FIG. 5 shows another exemplary primary flight display representation generated using the system of FIG. 2; and
FIG. 6 is a flowchart of a method for controlling a display device of an aircraft.

### DETAILED DESCRIPTION

Systems and methods for assisting a pilot during flight of an aircraft are disclosed herein. In various embodiments, the systems and methods disclosed herein can improve the operation of an aircraft flight deck by providing visualization techniques to display textual objects in a manner that reduces interference with traditional display characters and symbology used on a primary flight display (PFD) or other types of aircraft displays. In some embodiments, the systems and methods disclosed herein can enable high saliency to be achieved for textual objects associated with immediate action flags while limiting the distraction of a pilot prior to or during escape maneuvers requiring significant pilot attention for example. In some embodiments, the systems and methods disclosed herein can permit the saliency of textual objects to be commensurate with associated alert levels. In some embodiments, the systems and methods disclosed herein can permit the simultaneous display of textual and/or graphical objects in a superimposed yet clear and effective manner.

In some embodiments, the systems and methods disclosed herein can enhance the situational awareness of the pilot during phases of flight of relatively high workload. Such enhancement in situational awareness can improve flight safety by helping reduce the potential for pilot error. The systems and methods disclosed herein can be used during various phases of operation (e.g., flight) of aircraft.

Aspects of various embodiments are described through reference to the drawings.

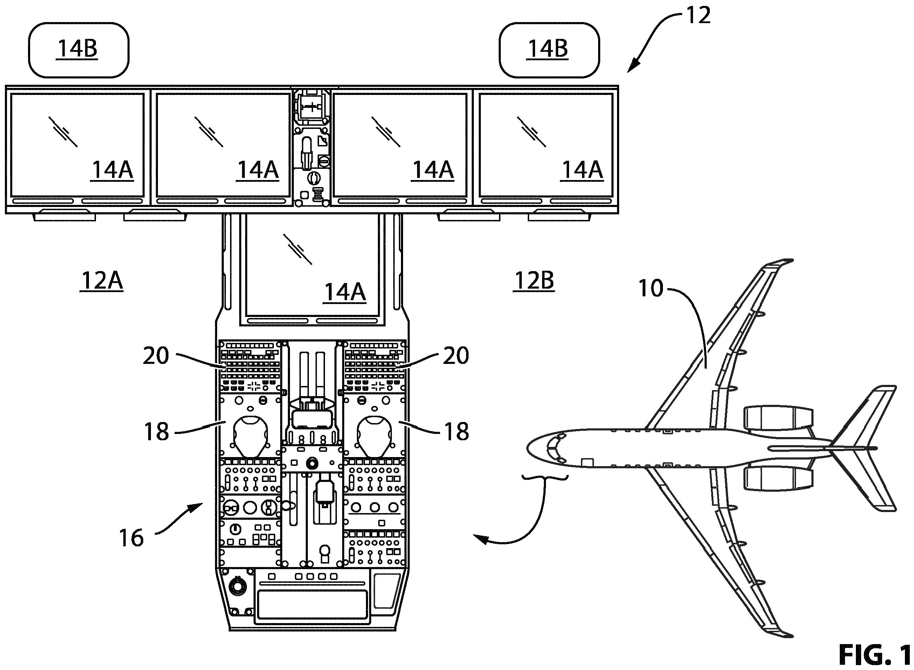

FIG. 1 shows an exemplary aircraft 10 and a partial schematic representation of flight deck 12 which can be part of aircraft 10. Aircraft 10 can be a corporate, private, commercial or any other type of aircraft. For example, aircraft 10 can be a fixed-wing or rotary-wing aircraft. In some embodiments, aircraft 10 can be a narrow-body, twin engine jet airliner or an (e.g., ultra-long-range) business jet. Aircraft 10 can be a drone controlled remotely. Flight deck 12 can include additional or fewer elements than those shown and described herein. Flight deck 12 can include left portion 12A intended to be used by a pilot (sometimes referred as "captain") of aircraft 10 and right portion 12B intended to be used by a co-pilot (sometimes referred as "first officer") of aircraft 10. As referenced herein, the term "pilot" is intended to encompass an individual responsible for the operation of aircraft 10 during flight either onboard aircraft 10 or off of aircraft 10. Left portion 12A and right portion 12B can have functionally identical components so that at least some operational redundancy can be provided between left portion 12A and right portion 12B of flight deck 12.

Flight deck 12 can include one or more display devices 14A, 14B (referred generally herein as "display device 14") providing respective display areas. In the exemplary configuration of flight deck 12 shown in FIG. 1, left portion 12A and right portion 12B can each include two head-down display devices 14A (referred hereinafter in the singular as "HDD 14A") and an additional HDD 14A can be provided in pedestal region 16 of flight deck 12. HDD 14A provided in pedestal region 16 can be shared by the two pilots during normal operation of aircraft 10. HDDs 14A can include one or more cathode-ray tubes (CRTs), liquid crystal displays (LCDs), plasma displays, light-emitting diode (LED) based displays or any type of display device suitable for use in flight deck 12. HDDs 14A can be configured to dynamically display (e.g., real-time) information about various systems of aircraft 10, information related to flight/mission planning, maps and any other information that can be useful to the pilot during the operation of aircraft 10. HDDs 14A can facilitate dialog between the pilot and various systems of aircraft 10 via suitable graphical user interfaces. Flight deck 12 can include one or more data input devices such as, for example, one or more cursor control devices 18, one or more multi-function keypads 20 that permit data entry by the pilot. In some embodiments, one or more HDDs 14A could have touch sensitive display area(s) to permit user input by way of the pilot touching the applicable display area(s).

Flight deck 12 can also include one or more head-up display devices 14B (referred hereinafter in the singular as "HUD 14B") which can be transparent displays that can present data without requiring the pilot to look away from his/her usual point out the windshield of aircraft 10. HUD 14B can present information to the pilot while the pilot's head is positioned "up" and looking forward, instead of angled down looking at lower instruments or displays such as HDDs 14A. In various embodiments, right and left portions 12A, 12B of flight deck 12 can each have a HUD 14B or, alternatively, flight deck 12 can include only one HUD 14B disposed in left portion 12A of flight deck 12 for example. HUDs 14A can either be fix-mounted displays or head-mounted displays (including helmet-mounted displays). In various embodiments, HUD 14B can include a CRT configured to generate an image on a phosphor screen, a solid state light source such as a LED that is modulated by an LCD screen to display an image, optical waveguides that produce an image directly in a combiner, or a scanning laser configured to display an image on a transparent medium.

It is understood that aspects of this disclosure, including the display of textual objects, are not limited to one or more display devices 14 that are part of flight deck 12 or that are onboard aircraft 10. For example, the display of textual objects and associated steps could, alternatively or in addition, be performed off of aircraft 10 using a system and/or display device 14 that are located off of aircraft 10 and are used to control aircraft 10 remotely. For example, relevant information could be transmitted between aircraft 10 and a location remote from aircraft 10 (e.g., ground station) in order to be used by an operator (i.e., pilot) controlling/flying aircraft 10 remotely.

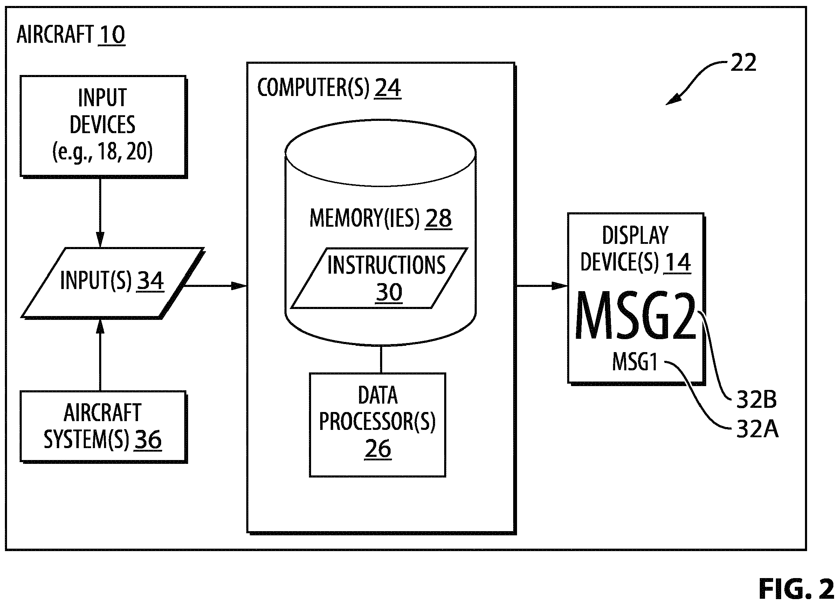

FIG. 2 shows a schematic representation of an exemplary system 22 which can be part of aircraft 10 or off of aircraft 10 and which can assist a pilot during flight of aircraft 10 by providing enhanced situational awareness to the pilot with reduced distraction. System 22 can be integrated with flight deck 12. System 22 can include one or more computers 24 (referred hereinafter in the singular) operatively connected to one or more display devices 14 (e.g., HDD 14A and/or HUD 14B) of flight deck 12. Computer 24 can be configured to control at least some of the information/content displayed on display device 14. System 22 and methods disclosed herein can be used with one or more display devices 14 operating as PFDs. Accordingly, the textual objects defined herein can be displayed on one or more PFDs.

Computer 24 can include one or more data processors 26 (referred hereinafter in the singular) and one or more computer-readable memories 28 (referred hereinafter in the singular) storing machine-readable instructions 30 executable by data processor 26 and configured to cause data processor 26 to generate one or more outputs including one or more signals for causing display device 14 of aircraft 10 to display one or more textual objects 32A, 32B and optionally other textual or graphical (i.e., non-textual) objects.

Computer 24 can receive input(s) 34 in the form of data or information that can be processed by data processor 26 according to instructions 30 in order to generate suitable output for controlling display device 14. Input 34 can include information (data) associated with the operation of aircraft 10. Input 34 can be received via manual entry by the pilot using one or more pilot input devices such as cursor control device 18 and/or multi-function keypad 20 for example. Alternatively or in addition, input 34 can be received automatically from one or more data sources (e.g., aircraft systems 36) operatively connected to computer 24 such as a navigation system, a flight management system, an air data system and/or a (e.g., radar) altimeter for example. Input 34 can include operating parameters of aircraft 10 measured via suitable sensors or derived from data acquired via such sensors. Input 34 can include data indicative of a substantially real-time status of aircraft 10. The term "substantially" as used herein may be applied to modify any quantitative representation which could permissibly vary without resulting in a change in the basic function to which it is related.

Computer 24 can be part of an avionics suite of aircraft 10 and be operatively integrated with avionic components of aircraft 10. For example, in some embodiments, computer 24 can be configured to carry out additional functions than those described herein including the management of one or more graphic user interfaces of flight deck 12 and/or other part(s) of aircraft 10. The methods disclosed herein (or part(s) thereof) could be performed using a plurality of computers 24 or data processors 26, or, alternatively, be performed entirely using a single computer 24 or data processor 26. In some embodiments, computer 24 could be physically integrated with (e.g., embedded in) display device 14.

Data processor 26 can include any suitable device(s) configured to cause a series of steps to be performed by computer 24 so as to implement a computer-implemented process such that instructions 30, when executed by computer 24, can cause the functions/acts specified in the methods described herein to be executed. Data processor 26 can include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 28 can include any suitable known or other machine-readable storage medium. Memory 28 can include non-transitory computer readable storage medium such as, for example, but not limited to, an electronic, magnetic, optical, electromagnetic, infrared, or semiconductor system, apparatus, or device, or any suitable combination of the foregoing. Memory 28 can include a suitable combination of any type of computer memory that is located either internally or externally to computer 24. Memory 28 can include any storage means (e.g. devices) suitable for retrievably storing machine-readable instructions 30 executable by data processor 26.

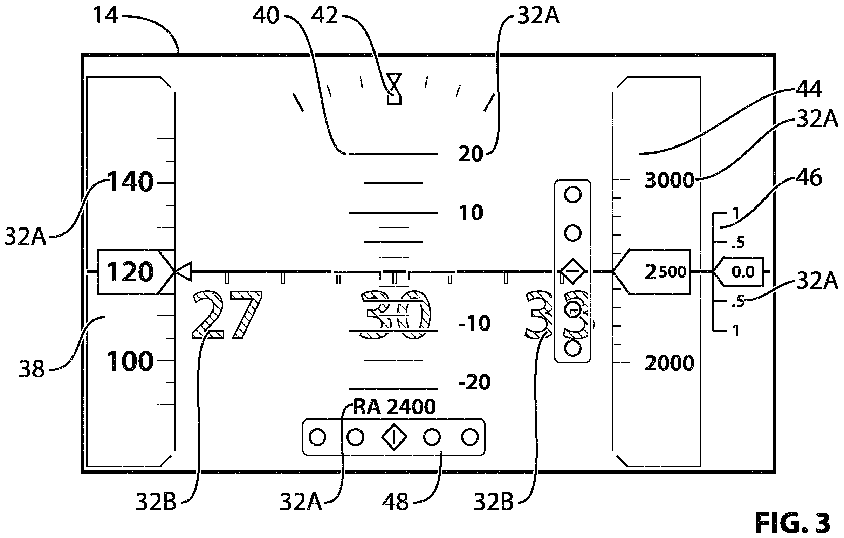

FIG. 3 shows an exemplary representation of a PFD displayed on display device 14 using system 22. In various embodiments, the PFD representation shown on display device 14 can include one or more of the following: airspeed indicator 38, attitude indicator 40 sometimes referred to as "ADI", side slip indicator 42, altimeter 44, vertical speed indicator 46, turn indicator 48, horizontal situation indicator (not shown), flight path vector (not shown) and flight director (not shown). The area of display device 14 that is typically used as attitude indicator 40 can inform the pilot of the pitch and roll characteristics of aircraft 10 and the orientation of aircraft 10 with respect to the horizon substantially in real time. Attitude indicator 40 can be located generally centrally in the PFD representation.

The information presented in various areas and indicators of display device 14 can be based on real-time data associated with the operation of aircraft and received as input 34. The information can be presented using graphical objects (e.g., lines, symbols or other non-textual objects) and/or textual objects. In some embodiments, system 22 can be configured to present one or more first textual objects 32A in the PFD representation in one or more "regular" first font sizes and one or more second textual objects 32B in the same PFD representation in one or more significantly larger second font sizes compared to the first font sizes of any first textual objects 32A that are displayed in the PFD representation simultaneously with second textual objects 32B. The significantly large difference in font sizes between first and second textual objects 32A, 32B (and optionally other visual characteristics disclosed herein) can help the pilot distinguish between different types of information presented by offering a relatively clear visual grouping between the types of information. In some embodiments, first textual objects 32A of the first font size can be associated with primary flight information which can include a pitch scale, flight path vector, flight director and a speed indication and an altitude indication. The primary flight information may be defined as basic flight parameters that are known to a person skilled in the art as being common to all PFDs, and comprises at least one of airspeed, vertical speed, attitude and altitude.

In some embodiments, second textual objects 32B of the second font size can be associated with awareness-type of information which can include alert messages and numerical values along a scale for example. Awareness-type information can be defined as information that is not (i.e., other than) primary flight information.

The font size as referenced herein is intended to represent the overall size (generally height) of a font shown on display device 14. The font size can be measured in a point (pt) size, which is the vertical measurement of the lettering where 72 points is equal to one inch (25.4 mm). In some embodiments, the second font size(s) of second textual object(s) 32B can be at least 2.5 times larger than the first font size(s) of first textual object(s) 32A. In some embodiments, the second font size(s) of second textual object(s) 32B can be three or more times larger than the first font size(s) of first textual object(s) 32A. In some embodiments, the second font size(s) of second textual object(s) 32B can be four or more times larger than the first font size(s) of first textual object(s) 32A. In some embodiments, the second font size(s) of second textual object(s) 32B can be five or more times larger than the first font size(s) of first textual object(s) 32A. In some embodiments, the second font size(s) of second textual object(s) 32B can be up to ten times larger than the first font size(s) of first textual object(s) 32A. In some embodiments, the second font size(s) of second textual object(s) 32B can be between 2.5 and ten times larger than the first font size(s) of first textual object(s) 32A. In some embodiments, the second font size(s) of second textual object(s) 32B can be between 2.5 and eight times larger than the first font size(s) of first textual object(s) 32A. In some embodiments, the second font size(s) of second textual object(s) 32B can be between three and six times larger than the first font size(s) of first textual object(s) 32A. In some embodiments, the second font size(s) of second textual object(s) 32B can be between 2.5 and five times larger than the first font size(s) of first textual object(s) 32A. In various embodiments, the second font size(s) of second textual object(s) 32B can be about 2.5, about three, about four, about five, about six, about seven, about eight, about nine or about ten times larger than the first font size(s) of first textual object(s) 32A.

In addition to font size, other characteristics of second textual object(s) 32B can also be used to achieve the desired visual effect. For example, the characteristics of second textual object(s) 32B can be selected so that the primary flight information is not overly obscured (e.g., masked or covered) by second textual object(s) 32B and the pilot's eye scan pattern is also not overly disrupted. For example, the characteristics of second textual object(s) 32B can be selected to provide an appropriate level of saliency and prominence to make second textual object(s) 32B distinguishable from its surroundings. In some embodiments, the characteristics of second textual object(s) 32B can be selected to achieve a visual effect that is not overly bold or striking and also does not capture the pilot's eye scanning pattern for too long. The characteristics of second textual object(s) 32B can also be selected so as not to create a false image when combined with other graphical or textual objects that can be collocated with textual object(s) 32B.

Characteristics of second textual object(s) 32B can include one or more of the following: location within the display area of display device 14, font size, font style, use of bold characters, use of filled or hollow characters, color, shading, transparency level of characters, flashing, blinking, contrast, dynamic variation of color saturation, fading animation to introduce and remove second textual object(s) 32B from display device 14 and superimposition with other textual or graphical objects shown on display device 14. Shading can include graphical overlays both patterned and solid, whether opaque or partially transparent. During operation of system 22, commands for displaying second textual objects 32B on displayed device 14 generated by computer 24 can be representative of a string of textual characters, their position(s) within the display area of display device 14 and one or more properties that specify visual characteristics corresponding to the desired visual effect.

In reference to FIG. 3, second textual objects 32B can be numerical values such as "27", "30" and "33" that define a heading scale along a horizon line displayed in the PFD representation. Second textual objects 32B can be displayed in a display area that also includes attitude indicator 40. The visual characteristics of second textual objects 32B can be selected to exhibit a level of saliency that is commensurate with a level of alert (urgency) associated with the information represented by second textual objects 32B. In this embodiment, second textual objects 32B have a relatively high transparency level and have a color (e.g., white) selected to correspond to a relatively low level of alert. While second textual objects 32B effectively convey the intended information to the pilot, they are not overly distracting to the pilot and also do not significantly obscure other primary flight information displayed on display device 14.

Second textual objects 32B can be positioned within the PFD representation and in a superimposed relationship with other textual objects (e.g., first textual objects 32A) and/or graphical objects (e.g., lines and symbols) displayed in the same display area. In other words, one or more second textual objects 32B can be collocated with one or more first textual objects 32A or other object(s). Accordingly, the message represented by second textual objects 32B does not need to be presented in a region of the display area that is free of other objects. In the example shown, numerical value "30" is in a superimposed relationship with horizontal lines that are part of a pitch scale of attitude indicator 40. In various embodiments, second textual objects 32B can displayed to overlay other objects or be under other objects. In some embodiments first and second textual objects 32A, 32B can be at least partially superimposed. Second textual objects 32B can have a transparent background area so as not to obstruct the underlying display around and between the characters of second textual objects 32B.

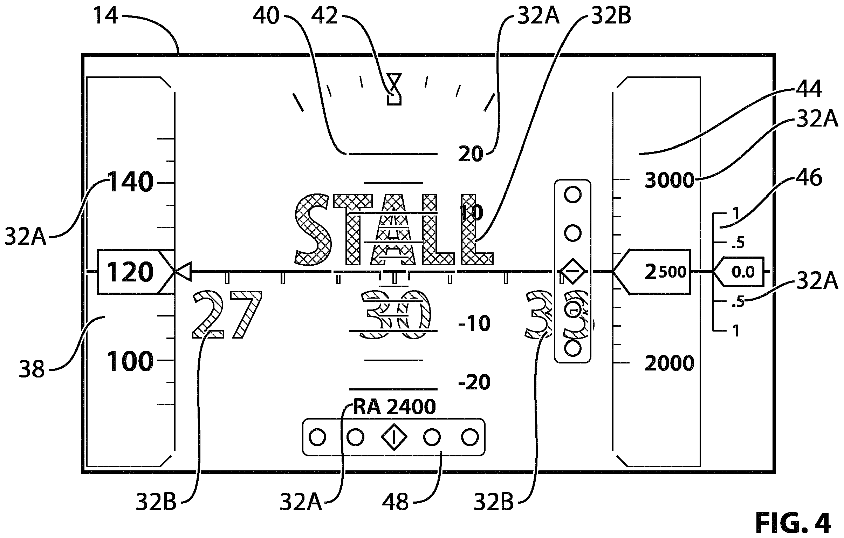

FIG. 4 shows another exemplary representation of a PFD displayed on display device 14 using system 22. Second textual objects 32B can include numerical values "27", "30" and "33" from FIG. 3 and, alternatively or in addition, an alert flag displaying the message "STALL". The alert flag can be displayed in a display area that also includes attitude indicator 40. For example, the alert flag can be displayed in a central region of the PFD representation and may overlay part of attitude indicator 40.

The alert flag can be associated with a miscompare error, failure or other time-critical event. The visual characteristics of the alert flag can be selected to exhibit a level of saliency that is commensurate with the level of alert associated with the information represented by the alert flag. In this embodiment, the alert flag has a lower transparency level, has a larger font size than the numerical values "27", "30" and "33", and has a color (e.g., red) selected to correspond to a relatively high level of alert. In various embodiments colors such as white, amber and red can be used for low, medium (caution) and high (warning) alert levels respectively. While the "STALL" alert flag effectively conveys the intended message and the corresponding alert level to the pilot, the alert flag does not significantly obscure other primary flight information displayed on display device 14 and does not pull the pilot's gaze away from the primary flight information, which can be helpful to the pilot when dealing with the situation associated with the alert flag.

The alert flag can be positioned within the PFD representation of display device 14 and in a superimposed relationship with other textual objects (e.g., first textual objects 32A) and/or graphical objects (e.g., lines and symbols) displayed in the same display area. In some embodiments, corresponding haptic and/or audible alert(s) can be generated in conjunction with the alert flag displayed in the PFD representation.

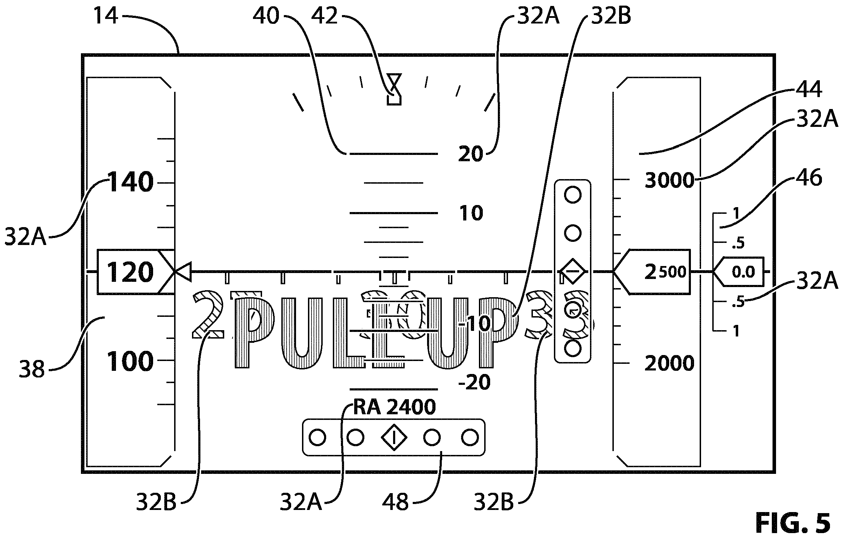

FIG. 5 shows another exemplary representation of a PFD displayed on display device 14 using system 22. Second textual objects 32B can include numerical values "27", "30" and "33" from FIG. 3 and, alternatively or in addition, also another alert flag displaying the message "PULL UP". The alert flag can be displayed in the PFD representation and may overlay part of attitude indicator 40. The visual characteristics of the alert flag can be selected to exhibit a level of saliency that is commensurate with the level of alert associated with the information represented by the alert flag. In this embodiment, the alert flag has a lower transparency level and has a larger font size than the numerical values "27", "30" and "33" selected to correspond to a relatively high level of alert. While the "PULL UP" alert message effectively conveys the intended message and the corresponding alert level to the pilot, the alert flag does not significantly obscure other primary flight information displayed on display device 14 and does not pull the pilot's gaze away from the primary flight information, which can be helpful to the pilot when dealing with the situation of aircraft 10 associated with the alert flag.

The position of the alert flag can be linked to a particular phase of operation (e.g., flight) of aircraft 10. For example, an alert flag displayed during an approach phase of flight could be displayed at a lower position on the display area compared to the same or other alert flag being displayed during another phase of flight. In some embodiments, the position of second textual object 32B can depend on the content of second textual object 32B.

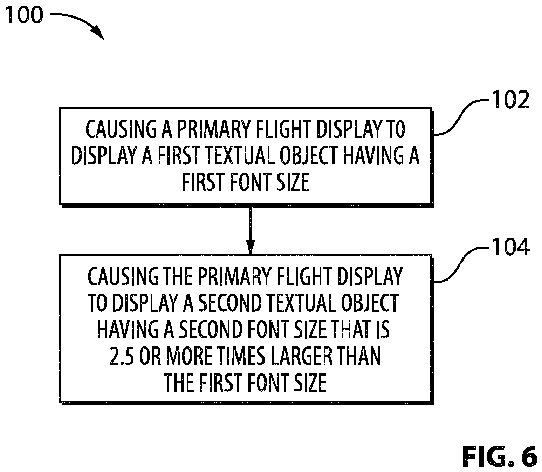

FIG. 6 is a flowchart of method 100 for controlling a (e.g., primary flight) display device of aircraft 10. Method 100 can be computer-implemented and performed using system 22 described herein or other suitable system. Accordingly, the functionality of system 22 disclosed herein is also applicable to method 100 and is not repeated below in relation to method 100. Method 100 can comprise:
using data (e.g., input 34 in FIG. 2) associated with an operation of aircraft 10, causing a PFD representation to be displayed on display device 14, the PFD representation including first textual object 32A having a first font size (see block 102); and
causing the PFD representation on the display device 14 to include second textual object 32B having a second font size that is 2.5 or more times larger than the first font size (see block 104).

The above description is meant to be exemplary only, and one skilled in the relevant arts will recognize that changes may be made to the embodiments described without departing from the scope of the invention disclosed. The present disclosure may be embodied in other specific forms without departing from the subject matter of the claims. The present disclosure is intended to cover and embrace all suitable changes in technology. Modifications which fall within the scope of the present invention will be apparent to those skilled in the art, in light of a review of this disclosure, and such modifications are intended to fall within the appended claims. Also, the scope of the claims should not be limited by the preferred embodiments set forth in the examples, but should be given the broadest interpretation consistent with the description as a whole.

## Claims

1. A primary flight display system for an aircraft (10), the system comprising:
a display device (14);
one or more processors (26) operatively connected to the display device (14); and
non-transitory machine-readable memory operatively connected to the one or more processors (26), storing instructions executable by the one or more processors (26) and configured to cause the one or more processors (26) to:
using data associated with an operation of the aircraft (10), cause a primary flight display representation (PFD) to be displayed on the display device (14), the primary flight display representation (PFD) including a first textual object (32A) having a first font size; and
cause the primary flight display representation (PFD) on the display device (14) to include a second textual object (32B) having a second font size, the second font size being 2.5 or more times larger than the first font size.

2. The system as defined in claim 1, wherein the second font size is three or more times larger than the first font size.

3. The system as defined in claim 1, wherein the second font size is about four times larger than the first font size.

4. The system as defined in claim 1, wherein the second font size is about five times larger than the first font size.

5. The system as defined in claim 1, wherein the second font size is between 2.5 and ten times larger than the first font size.

6. The system as defined in claim 1, wherein the second font size is between three and six times larger than the first font size.

7. The system as defined in any one of claims 1 to 6, wherein the second textual object (32B) is an alert flag.

8. The system as defined in claim 7, wherein the second textual object (32B) has a transparent background.

9. The system as defined in any one of claims 1 to 8, wherein the second textual object (32B) has a color that is commensurate with an alert level associated with the second textual object (32B).

10. The system as defined in any one of claims 1 to 9, wherein the second textual object (32B) has a transparency level that is commensurate with the or an alert level associated with the second textual object (32B).

11. The system as defined in any one of claims 1 to 10, wherein the second font size of the second textual object (32B) is commensurate with the or an alert level associated with the second textual object (32B).

12. The system as defined in any one of claims 1 to 11, wherein the second textual object (32B) defines an axis scale.

13. The system as defined in any one of claims 1 to 12, wherein the second textual object (32B) defines a heading scale.

14. The system as defined in any one of claims 1 to 13, wherein the first and second textual objects (32B) are collocated.

15. The system as defined in any one of claims 1 to 14, wherein the first and second textual objects (32A, 32B) are at least partially superimposed.
